# FASCICULE DE BREVET EUROPEEN

(11) **EP 4 031 602 B1**
(45) Date de publication et mention de la délivrance du brevet: **31.12.2025**
(21) Numéro de dépôt: 20820256.4
(22) Date de dépôt: 17.09.2020
(51) Int. Cl.: C08G 77/16, C08G 77/18, C08G 77/26, C08G 77/00, C09D 183/06, C09D 183/08, C08G 18/10, C08G 18/28, C09D 175/04, C08L 83/06, C08L 83/08

(54) **COMPOSITION DE MASTIC RETICULABLE A L'HUMIDITE POUR EXPOSITION DU JOINT A TEMPERATURE ELEVEE**
FEUCHTIGKEITSHÄRTBARE DICHTUNGSZUSAMMENSETZUNG FÜR HOCHTEMPERATURAUSSETZUNG
MOISTURE-CURABLE SEALANT COMPOSITION FOR HIGH TEMPERATURE EXPOSURE

(30) Priorité: 19.09.2019 FR 1910308
(43) Date de publication de la demande: 27.07.2022
(73) Titulaire: Bostik SA, 92800 Puteaux (FR)
(72) Inventeur: SANZ, Federico, 60280 VENETTE (FR)
(74) Mandataire: Arkema Patent
(86) Numéro de dépôt international: PCT/FR2020/051606
(87) Numéro de publication internationale: WO 2021/053298

(56) Documents cités:
- WO-A1-2018/215463
- WO-A1-2019/134863
- US-A1- 2012 009 366
- US-A1- 2019 048 190

## Description

### DOMAINE DE L'INVENTION

La présente invention a pour objet une composition de mastic réticulable à l'humidité, plus précisément une composition d'un mastic silylé, utilisable notamment dans le domaine de la construction, et qui est apte à former, après réticulation, un joint adhésif dont la stabilité après exposition à température élevée est améliorée.

### ARRIERE PLAN TECHNIQUE

Les mastics sont largement utilisés, notamment en raison de leurs propriétés mécaniques, dans le domaine de la construction. Ils sont par exemple mis en œuvre, grâce à leurs propriétés de résistance à la déformation, pour des collages structuraux tels que le collage d'éléments en béton dans le génie civil (comme pour la construction de ponts ou d'immeubles en béton) ou encore pour le jointoiement ou calfeutrement des interstices entre deux éléments de construction. Les mastics permettent encore, grâce à leurs propriétés élastiques, d'obtenir un joint qui est stable aux variations dimensionnelles induites par divers facteurs externes comme les changements de température ou encore un joint qui est suffisamment flexible pour se déformer et s'adapter aux mouvements relatifs des substrats entre lesquels ils ont été appliqués.

La résistance à la déformation d'un mastic est, dans la pratique, souvent représentée par le module élastique (exprimé en Pa). Ce dernier est défini, dans un essai de traction d'une éprouvette de mastic, comme étant le rapport de la contrainte qu'il faut appliquer à ladite éprouvette pour en obtenir une déformation (également appelée élongation ou allongement) donnée. L'élongation est donc la longueur à laquelle une éprouvette de mastic peut s'allonger, exprimée en pourcentage de sa taille initiale. Le module élastique est souvent mesuré pour une élongation de 100 %.

Les propriétés élastiques d'un mastic sont en général quantifiées par l'élongation à la rupture. Cette dernière (exprimée en %) est définie, dans un essai de traction d'une éprouvette de mastic, comme l'allongement mesuré pour l'éprouvette au moment de sa rupture.

En dehors de leurs propriétés mécaniques, les mastics utilisés dans la construction sont appréciés pour leur capacité à adhérer à toute une variété de substrats et leur résistance aux conditions météorologiques (UV, ozone, eau).

Une composition adhésive de mastic réticulable à l'humidité, telle qu'une composition de mastic silylé, comprend un prépolymère réticulable à l'humidité qui est doté de groupes réactifs alcoxysilane, généralement terminaux. La réaction de ces groupes réactifs avec l'eau provenant de l'humidité de l'air ou du substrat (dénommée réaction de réticulation) permet, après la mise en œuvre du mastic, la création d'un réseau polymérique tridimensionnel solide, qui confère au joint adhésif ainsi créé les propriétés souhaitées, notamment mécaniques.

La demande internationale selon le PCT WO 2018/215463 divulgue une telle composition, qui comprend, outre un polymère silylé à groupement alcoxysilane et une charge, de 0,68 % à 1 % en poids d'un silsesquioxane avec un groupement phényle et un groupement alcoxy.

La demande internationale selon le PCT WO 2018/215463 divulgue une composition destinée à la préparation d'un mastic silylé à bas module présentant des propriétés mécaniques stables et utilisé dans le domaine de la construction en tant que joint comprennent un polymère silylé comprenant au moins un groupement terminal alkoxysilyle, un polysilsesquioxane comprenant des groupes Si-phényle et des groupes alkoxysilyle -Si(OR), un carbonate de calcium et un catalyseur de condensation.

Le brevet US 2019/048190 décrit une composition utilisé en tant qu'adhésif ou joint, principalement dans le domaine de la construction. La composition comprend un polymère comprenant une fonction terminale alkoxysilyle, une résine silicone comprenant des groupes phényles et méthoxysilyle SiOMe, un catalyseur de condensation et du carbonate de calcium.

La demande internationale selon le PCT WO 2019/134863 divulgue une composition de silicone à bas module et destinée à être utilisée en tant qu'adhésif ou joint, en particulier dans le domaine de la construction et comprenant un silicone ayant des fonctions hydroxyles, du carbonate de calcium, un polysiloxane comprenant des fonctions amines et un catalyseur de condensation.

Finalement , le brevet US 2012/009366 décrit une composition de silicone à bas module et destinée à être utilisée en tant que joint ou mastic, en particulier dans le domaine de l'assemblage de fenêtres et comprenant un copolymère isobutylène-styrène fonctionalisé par un groupe méthoxysilyle, une résine silicone comprenant des groupes phényle et hydroxyle et un catalyseur de condensation.

Parmi les multiples applications possibles des mastics dans les domaines de la construction ou de l'industrie, il en est certaines par exemple pour lesquelles le joint adhésif est situé à l'extérieur, au contact de l'atmosphère, ou encore sous une paroi de verre. De tels joints sont ainsi susceptibles d'être exposés, durant de longues périodes de temps, à des températures élevées sous l'effet du rayonnement solaire et en raison du climat propre aux pays chauds, typiquement des températures pouvant aller jusqu'à 90 °C. Pour d'autres applications encore, industrielles, des joints adhésifs peuvent être exposés fréquemment à des températures encore supérieures, pouvant aller jusqu'à 140°C.

Il existe ainsi un besoin que de tels joints adhésifs maintiennent sur la durée leurs propriétés mécaniques avantageuses, notamment de résistance à la déformation et d'élasticité.

La présente invention a donc pour but de fournir une composition de mastic comprenant un polymère à groupement alcoxysilane, qui permette, après réticulation, la formation d'un joint adhésif qui présente une stabilité améliorée lorsqu'il est exposé à des températures élevées.

Un autre but de la présente invention est de fournir une composition de mastic comprenant un polymère à groupement alcoxysilane qui permette, après réticulation et après exposition sur une longue durée du joint adhésif à une température élevée, de maintenir les propriétés de résistance à la déformation et les propriétés d'élasticité à un niveau acceptable en pratique, notamment son élongation à la rupture et son module élastique.

### DESCRIPTION DE L'INVENTION

L'invention concerne donc une composition de mastic comprenant :
- de 3 à 80 % d'un polymère (A) à groupement alcoxysilane,
- d'au moins 25 % d'une charge carbonatée (B), et
- de 0,5 à 20 % d'une résine polysiloxane (C) comprenant, en tant que groupements directement reliés à l'atome de silicium :
   - au moins un groupement phényle ; et
   - au moins un groupement choisi parmi un hydroxyle et un groupement aminoalkylène de formule : -R'⁰- NH-R"⁰ ; dans laquelle :
      - R'⁰ est un radical alkylène comprenant de 2 à 5 atomes de carbone, et
      - R"⁰ est un atome d'hydrogène ou un radical alkyle comprenant de 1 à 5 atomes de carbone ; et
- de 0,1 à 1 % d'un catalyseur de réticulation (D) ;
lesdits pourcentages étant exprimés en poids sur la base du poids total de ladite composition.

Il a en effet été trouvé que cette composition de mastic objet de l'invention permet d'obtenir après réticulation un joint adhésif qui conserve mieux ses propriétés de résistance à la déformation et d'élasticité, notamment de module élastique et d'élongation à la rupture, après avoir été exposé durant une semaine à des températures comprises entre 80 et 150°C. Ces propriétés d'élasticité sont en particulier, de manière surprenante, significativement améliorées par rapport à celles de la composition de mastic objet du WO 2018/215463 cité ci-dessus.

### Polymère (A) à groupement alcoxysilane :

La composition de mastic selon l'invention comprend de 3 à 80 % en poids d'un polymère à groupement alcoxysilane, sur la base du poids total de ladite composition.

Le polymère à groupement alkoxysilane est un polymère qui comprend au moins un, de préférence au moins deux groupements de formule (I) : 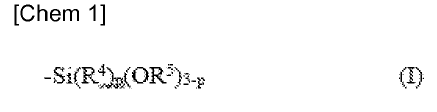 dans laquelle :
- R⁴ et R⁵, identiques ou différents, représentent chacun un radical alkyl linéaire ou ramifié comprenant de 1 à 4 atomes de carbone; et
- p est un nombre entier égal à 0, 1 ou 2 ;
et, de préférence :
- R⁴ et R⁵ représentent chacun un radical méthyle ; et
- p est égal à 0 ou 1.

De préférence, le ou les groupements de formule (I) sont des groupements situés aux extrémités de la chaîne principale du polymère, encore appelés groupements terminaux.

De préférence, la chaîne principale du polymère comprenant au moins un groupement alkoxysilane est choisie parmi les polyuréthanes, les polyéthers et leurs mélanges.

Le polymère comprenant au moins un groupement alkoxysilane peut présenter une masse moléculaire moyenne en nombre allant de 500 à 50 000 g/mol, de préférence encore allant de 700 à 20 000 g/mol. La masse moléculaire moyenne en nombre des polymères peut être mesurée par des méthodes bien connues de l'homme du métier, par exemple par chromatographie d'exclusion stérique en utilisant des étalons de type polyéthylène glycol.

Selon un mode de réalisation, le polymère (A) comprenant au moins un groupement alkoxysilane est choisi parmi les polymères de formules (II), (III) ou (IV) telles que définies ci-dessous, et leurs mélanges :
[Chem 2]

(R⁵O)₃₋ₚ(R⁴)ₚSi - R⁰ - [OR²]ₙ - R⁰ - Si(R⁴)p(OR⁵)₃₋ₚ (II)

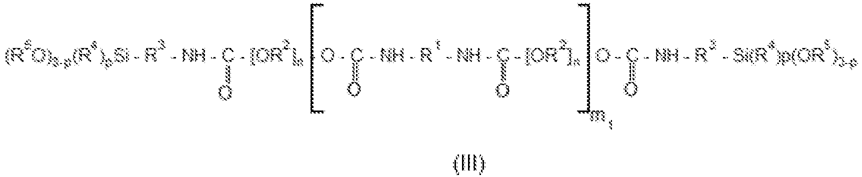

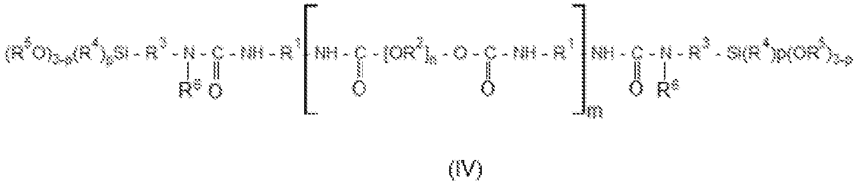

dans lesquelles :
- R⁰ représente un radical divalent alkylène linéaire ou ramifié comprenant de 3 à 6 atomes de carbone ;
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 2 à 4 atomes de carbone ;
- R³ représente un radical divalent alkylène linéaire ou ramifié comprenant de 1 à 6 atomes de carbone, R³ représentant de préférence les radicaux méthylène ou n-propylène ;
- R⁴ et R⁵, sont tels que définis précédemment ;
- R⁶ représente un atome d'hydrogène, un radical phényle, un radical alkyle linéaire, ramifié ou cyclique comprenant de 1 à 6 atomes de carbone, ou un radical 2-succinate de formule : 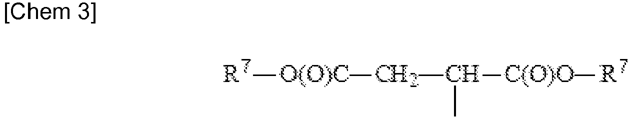 dans laquelle R⁷ est un radical alkyle linéaire ou ramifié comprenant de 1 à 6 atomes de carbone ;
- n est un nombre entier tel que la masse moléculaire moyenne en nombre du bloc polyéther de formule -[OR²]ₙ- va de 300 g/mol à 40 000 g/mol dans les polymères de formules (II), (III) et (IV) ;
- m₁ est zéro ou un nombre entier ;
- n et m₁ sont tels que la masse moléculaire moyenne en nombre du polymère de formule (III) va de 500 g/mol à 50 000 g/mol, de préférence de 700 g/mol à 20 000 g/mol ;
- m est un nombre entier différent de zéro ;
- n et m sont tels que la masse moléculaire moyenne en nombre du polymère de formule (IV) va de 500 g/mol à 50 000 g/mol, de préférence de 700 g/mol à 20 000 g/mol ;
- p est tel que définis précédemment.

De préférence, le radical R¹ des formules (III) et (IV) est choisi parmi l'un des radicaux divalents suivants dont les formules ci-dessous font apparaître les 2 valences libres :
- a) le radical divalent dérivé de l'isophorone diisocyanate (IPDI) : 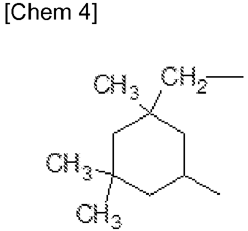
- b) le radical divalent dérivé des 4,4'- et 2,4'-dicyclohexylméthane diisocyanate (HMDI) : 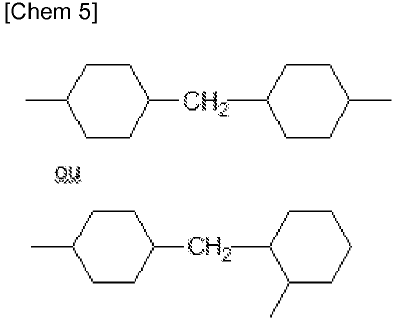
- c) le radical dérivé des 2,4- et 2,6-toluène diisocyanate (TDI) 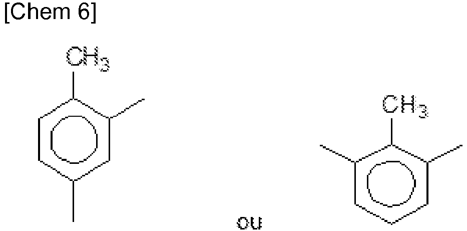
- d) le radical dérivé des 4,4'- et 2,4'-diphénylméthane diisocyanate (MDI) 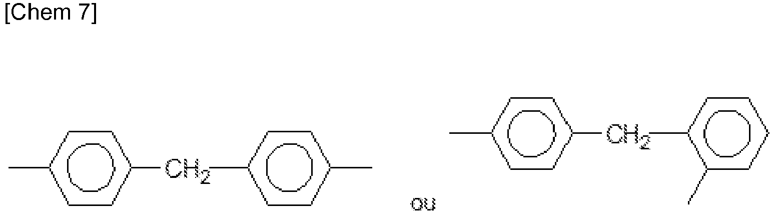
- e) le radical dérivé du m-xylylène diisocyanate (m-XDI) 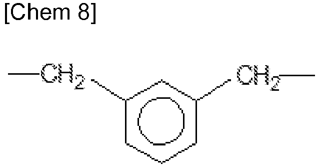
- f) le radical dérivé de l'hexamethylène diisocyanate (HDI)

   [Chem 9] -(CH₂)₆-

De préférence, le radical R¹ des formules (III) et (IV) est le radical divalent dérivé de l'isophorone diisocyanate ou du xylylène diisocyanate.

Les polymères de formule (II) peuvent être obtenus par hydrosilylation de polyéther diallyléther selon un procédé décrit par exemple dans le document EP 1829928.

Parmi les polymères répondant à la formule (II), on peut citer :
- le MS POLYMER^{™} S303H (disponible auprès de KANEKA) correspondant à un polyéther comprenant deux groupements de formule (I) de type diméthoxy (p est égal à 1 et R⁴ représente un groupement méthyle) ayant une masse moléculaire moyenne en nombre d'environ 22 000 g/mol et une viscosité de 12,5 Pa.s à 23°C ;
- le MS POLYMER^{™} S227 (disponible auprès de KANEKA) correspondant à un polyéther comprenant deux groupements de formule (I) de type diméthoxy (p est égal à 1, R⁵ et R⁴ représentent chacun un groupement méthyle) ayant une masse moléculaire moyenne en nombre d'environ 27 000 g/mol, et une viscosité de 34 Pa.s à 23°C.

Les polymères de formule (III) peuvent être obtenus selon un procédé décrit dans les documents EP 2336208 et WO 2009/106699.

Parmi les polymères répondant à la formule (III), on peut par exemple citer :
- GENIOSIL^{®} STP-E10 (disponible auprès de Wacker) : polyéther comprenant deux groupements (I) de type diméthoxy (m₁ égal à 0, p égal à 1 et R⁴ et R⁵ représentent un groupement méthyle) présentant une masse moléculaire moyenne en nombre d'environ 8 889 g/mol où R³ représente un groupement méthylène;
- GENIOSIL^{®} STP-E30 (disponible auprès de Wacker) : polyéther comprenant deux groupements de formule (I) de type diméthoxy (m₁ égal à 0, p égal à 1 et R⁴ et R⁵ représentent un groupement méthyle) présentant une masse moléculaire moyenne en nombre d'environ 14 493 g/mol où R³ représente un groupement méthylène;
- GENIOSIL^{®} STP-E35 (disponible auprès de Wacker) : polyéther comprenant deux groupements de formule (I) de type triméthoxy (m₁ égal à 0, p égal à 0 et R⁵ représente un groupement méthyle), présentant une masse moléculaire moyenne en nombre d'environ 32 240 g/mol où R³ représente un groupement n-propylène, et ayant une viscosité d'environ 30 000 mPa.s à 23°C ;
- SPUR+^{®} 1050MM (disponible auprès de MOMENTIVE) : polyuréthane polyéther comprenant deux groupements de formule (I) de type triméthoxy (m₁ différent de 0, p égal à 0 et R⁵ représente un groupement méthyle) présentant une masse moléculaire moyenne en nombre d'environ 21 000 g/mol où R³ représente un groupement n-propylène ;
- SPUR+^{®} Y-19116 (disponible auprès de MOMENTIVE) : polyuréthane comprenant deux groupements de formule (I) de type triméthoxy (m₁ différent de 0 et R⁵ représente un groupement méthyle) présentant une masse moléculaire moyenne en nombre allant de 15 000 à 17 000 g/mol où R³ représente un groupement n-propylène ;
- DESMOSEAL^{®} S XP 2636 (disponible auprès de BAYER) : polyuréthane comprenant deux groupements de formule (I) de type triméthoxy (m₁ différent de 0, p égal à 0 et R⁵ représente un groupement méthyle) présentant une masse moléculaire moyenne en nombre d'environ 15 038 g/mol où R³ représente un groupement n-propylène.

Les polymères de formule (IV) peuvent être obtenus selon le procédé comprenant :
a) la réaction d'un polyéther polyol de formule suivante : 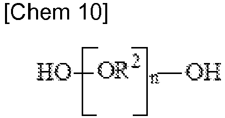 avec un excès stoechiométrique de diisocyanate de formule suivante: NCO-R¹-NCO pour former un bloc polyuréthane-polyéther ayant au moins deux groupes terminaux -NCO, ledit bloc comprenant de préférence de 1,5% à 1,9% en poids de groupement -NCO, puis
b) réaction entre un bloc obtenu à l'étape précédente avec une quantité stoechiométrique ou un léger excès d'un □-, □- ou □- aminosilane ayant la formule suivante :

   [Chem 11] (R⁵O)₃₋ₚ(R⁴)ₚSi-R³-NH-R⁶

Un tel procédé est par exemple décrit dans WO 2013/136108.

Parmi les polymères répondant à la formule (IV), on peut citer le SPUR+ 1015 LM (disponible auprès de MOMENTIVE) correspondant à un polyuréthane polyéther comprenant deux groupements de formule (I) de type triméthoxy (p est égal à 0, R⁵ représente un groupement méthyle) ayant une masse moléculaire en nombre d'environ 25 000 g/mol et une viscosité de 50 Pa à 23°C.

La composition selon l'invention peut comprendre un polymère de formule (II) ou un mélange de polymères différents de formule (II).

Elle peut également comprendre un polymère de formule (III) ou un mélange de polymères différents de formule (III).

Elle peut également comprendre un polymère de formule (IV) ou un mélange de polymères différents de formule (IV).

Selon un mode de réalisation préféré, la composition selon l'invention comprend un polymère de formule (II) et un polymère de formule (III).

Selon un mode de réalisation, la composition selon l'invention comprend de 5% à 60% en poids, préférentiellement de 5% à 50% en poids, avantageusement de 10% à 50%, par exemple de 10% à 40% en poids, avantageusement de 20% à 30%, en particulier de 22% à 24% en poids d'au moins un polymère comprenant un groupement alkoxysilane, par rapport au poids total de ladite composition.

### Charge carbonatée (B) :

La composition de mastic selon l'invention comprend au moins 25 % en poids d'une charge carbonatée, sur la base du poids total de ladite composition.

Selon un mode de réalisation, la charge carbonatée est choisie parmi les carbonates de métaux alcalin ou alcalino-terreux et leurs mélanges, de préférence la charge carbonatée est le carbonate de calcium.

Le carbonate de calcium peut être rendu hydrophobe, par exemple avec du stéarate de calcium ou un analogue permettant de conférer une hydrophobie partielle ou totale aux particules de carbonate de calcium. Le caractère plus ou moins hydrophobe du carbonate de calcium peut avoir un impact sur la rhéologie de la composition. De plus, le revêtement hydrophobe peut permettre d'empêcher que le carbonate de calcium n'absorbe les constituants de la composition et ne les rende inefficaces. Le revêtement hydrophobe du carbonate de calcium peut représenter de 0,1% à 3,5% en poids, par rapport au poids total de carbonate de calcium.

Le carbonate de calcium qui peut être utilisé dans la présente invention a de préférence une granulométrie allant de 0,1 à 400 µm, de préférence encore de 1 à 400 µm, préférentiellement de 10 à 350 µm, de préférence encore de 50 à 300 µm.

A titre d'exemple de carbonate de calcium, on peut citer le MIKHART^{®} 1T (disponible auprès de la société La Provençale).

Selon une variante préférée, la composition selon l'invention peut comprendre de 25% à 80% en poids, préférentiellement de 40% à 60% en poids, en particulier de 45% à 55% en poids de la charge carbonatée, par rapport au poids total de la composition.

### Résine polysiloxane (C) :

La composition de mastic selon l'invention comprend de 0,5 à 20 % d'une résine polysiloxane (C) comprenant, en tant que groupements directement reliés à l'atome de silicium:
- au moins un groupement phényle ; et
- au moins un groupement choisi parmi un hydroxyle et un groupement aminoalkylène de formule : -R'⁰- NH-R"⁰ ; dans laquelle
   - R'⁰ est un radical alkylène comprenant de 2 à 5 atomes de carbone, et
   - R"⁰ est un atome d'hydrogène ou un radical alkyle comprenant de 1 à 5 atomes de carbone.

Les résines polysiloxanes sont des résines polymères ou oligomères dont le motif de répétition est dérivé d'un composé siloxane de formule : R'R"SiO dans laquelle R' et R" sont des substituants organiques ou minéraux reliés directement à l'atome de silicum.

Ledit motif de répétition peut être compris, pour constituer une résine polysiloxane, dans une chaîne linéaire, dans une structure bidimensionnelle ou dans une structure tridimensionnelle, telle qu'un silsesquioxane.

Selon un mode de réalisation, la résine polysiloxane (C) est un silsesquioxane.

Les silsesquioxanes sont des polysiloxanes pouvant adopter une structure polyhédrique ou une structure polymérique, avec des liaisons Si-O-Si. Ils ont typiquement la structure générale suivante :

[RSiO_{3/2}]ₜ

dans laquelle R représente un radical organique, et t est un nombre entier pouvant varier de 6 à 12, de préférence t égale 6, 8, 10 ou 12.

Selon un mode préféré de réalisation, la résine polysiloxane (C) est un silsesquioxane ayant une structure polyhédrique (ou POSS pour « Polyhedral Oligomeric Silsesquioxane » en anglais).

De manière encore plus préférée, le silsesquioxane (C) répond à la formule générale (V) suivante : 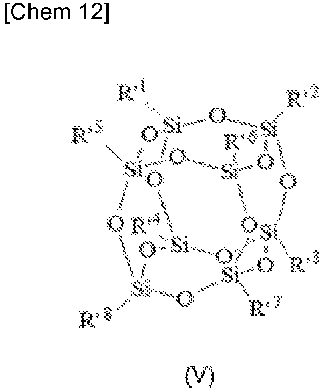
dans laquelle chacun de R'¹ à R'⁸ représente, indépendamment les uns des autres, un groupe choisi parmi :
   - un atome d'hydrogène,
   - un groupe hydroxy ou un groupe aminoalkylène de formule : -R'⁰- NH-R"⁰; dans laquelle R'⁰ et R"⁰ sont tels que définis précédemment ;
   - un radical choisi parmi le groupe constitué d'un radical alcoxy linéaire ou ramifié en C₁-C₄, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
   - un groupe -OSiR'⁹R'¹⁰ dans lequel R'⁹ et R'¹⁰ représentent chacun, indépendamment l'un de l'autre, un atome d'hydrogène ou un radical choisi dans le groupe constitué d'un alkyle linéaire ou ramifié en C₁-C₄, d'un alcoxy linéaire ou ramifié en C₁-C₄, d'un alcényle en C₂-C₄, d'un phényle, d'un radical allyle en C₃-C₆, d'un radical aliphatique cyclique en C₃-C₈, et d'un radical acyle en C₁-C₄ ;
à condition que :
   - au moins un radical parmi les radicaux R'¹ à R'⁸ soit le radical phényle ; et
   - au moins un radical parmi les radicaux R'¹ à R'⁸ soit ou bien un groupe hydroxyle ou bien un groupe aminoalkylène de formule : -R'⁰- NH-R"⁰; dans laquelle R'⁰ et R"⁰ sont tels que définis précédemment.

De préférence, dans la formule (V) susmentionnée, chacun de R'¹ à R'⁸ représente, indépendamment les uns des autres, un groupe choisi parmi :
- un atome d'hydrogène,
- un groupe hydroxy ou un groupe aminoalkylène de formule : -R'⁰- NH-R"⁰; dans laquelle R'⁰ et R"⁰ sont tels que définis précédemment ;
- un radical choisi parmi le groupe constitué d'un radical alcoxy linéaire ou ramifié en C₁-C₄, un radical alkyle linéaire ou ramifié comprenant de 1 à 12 atomes de carbone, préférentiellement de 1 à 8 atomes de carbone, et par exemple de 1 à 5 atomes de carbone, un radical aromatique comprenant de 6 à 12 atomes de carbone, et
- un groupe -OSiR'⁹R'¹⁰ dans lequel R'⁹ et R'¹⁰ représentent chacun, indépendamment l'un de l'autre, un atome d'hydrogène ou un radical choisi parmi un alkyle linéaire ou ramifié en C₁-C₄, par exemple le méthyle ou l'éthyle, de préférence le méthyle,
à condition que :
- au moins un radical parmi les radicaux R'¹ à R'⁸ soit un radical phényle ; et
- au moins un radical parmi les radicaux R'¹ à R'⁸ soit ou bien un groupe hydroxy ou bien un groupe aminoalkylène de formule : -R'⁰- NH-R"⁰; dans laquelle R'⁰ et R"⁰ sont tels que définis précédemment.

Selon un mode de réalisation, la résine polysiloxane (C) comprend, en tant que groupement directement relié à l'atome de silicium, au moins un groupement hydroxyle. La teneur en motifs Si-OH correspondants dans la résine polysiloxane (C) est généralement comprise entre 4 et 8 % en poids desdits motifs, sur la base du poids de (C).

Selon un autre mode de réalisation, la résine polysiloxane (C) comprend, en tant que groupement directement relié à l'atome de silicium, au moins un groupement aminoalkylène de formule : -R'⁰- NH-R"⁰, dans laquelle :
- R'⁰ est un radical alkylène comprenant de 2 à 5 atomes de carbone, et
- R"⁰ est un atome d'hydrogène ou un radical alkyle comprenant de 1 à 5 atomes de carbone.

Selon une variante encore davantage préférée, R'⁰ est un radical alkylène comprenant de 2 à 3 atomes de carbone et R"⁰ est un atome d'hydrogène.

La teneur en motifs Si-R'⁰- NH-R"⁰ correspondants dans la résine polysiloxane (C) est généralement telle que le poids de résine (C) par mole de NH est compris entre 200 et 300 g.

Selon encore un autre mode de réalisation, la résine polysiloxane (C), en particulier lorsqu'il s'agit d'un silsesquioxane (C), de préférence de formule (V), a une masse moléculaire moyenne en nombre allant de 400 g/mol à 4000 g/mol, préférentiellement de 500 g/mol à 2500 g/mol.

Les masses moléculaires moyennes en nombre des résines polysiloxanes, notamment des silsesquioxanes, peuvent être mesurées par des méthodes bien connues de l'homme du métier, par exemple par chromatographie d'exclusion stérique en utilisant des étalons de type polystyrène.

A titre d'exemple de polysiloxane (C), on peut citer les 2 produits suivants disponibles auprès de DOW CORNING :
- le DOWSIL^{®} 3055 (numéro CAS : 1242619-23-3) est un silsesquioxane dont la masse moléculaire moyenne en nombre est comprise entre 500 et 1000 g/mole, et qui comprend au moins un groupement phényle et au moins un groupement aminopropyle reliés directement à l'atome de silicium ; la teneur en motifs Si-aminopropyle étant telle que le poids dudit silsesquioxane par mole de NH est compris entre 250 et 270 g ;
- le DOWSIL^{®} RSN-0217 (numéro CAS : 63148-53-8) est un polysiloxane dont la masse moléculaire moyenne en nombre est comprise entre 1500 et 2500 g/mole, et qui comprend au moins un groupement phényle et au moins un groupement hydroxyle reliés directement à l'atome de silicium ; la teneur en motifs Si-OH correspondants dans ledit polysiloxane étant de 6 % en poids desdits motifs, sur la base du poids dudit polysiloxane.

Selon une variante préférée, la composition selon l'invention peut comprendre de 0,5 à 10%, préférentiellement de 0,5 à 5 %, en particulier de 0,5 à 1,5 % en poids de la résine polysiloxane (C), par rapport au poids total de composition.

### Catalyseur de réticulation (D) :

La composition de mastic selon l'invention comprend de 0,1 à 1 % d'un catalyseur de réticulation (D), sur la base du poids total de ladite composition.

Le catalyseur (D) peut être tout catalyseur connu par l'homme du métier pour la condensation de silanol. On peut citer comme exemples de tels catalyseurs :
- les aminosilanes comme le N-(2-aminoéthyl)-3-aminopropyltriméthoxysilane (commercialement disponible sous la dénomination SILQUEST^{®} A-1120 auprès de la société MOMENTIVE) ou le 3-aminopropyltriméthoxysilane,
- des dérivés organiques du titane comme l'acétyl acétonate de titane (disponible commercialement sous la dénomination TYZOR^{®} AA75 auprès de la société DU PONT DE NEMOURS),
- de l'aluminium comme le chélate d'aluminium (disponible commercialement sous la dénomination K-KAT^{®} 5218 auprès de la société KING INDUSTRIES),
- des amines comme le 1,8-diazabicyclo[5.4.0]undéc-7-ène (DBU) ou le 1,5-diazabicyclo[4.3.0]non-5-ène (DBN), l'éther diéthylique-2,2'-morpholine (DMDEE), le 1,4-diazabicylo[2.2.2]octane (DABCO),
- les catalyseurs à base d'étain comme par exemple le NEOSTANN^{®} S-1 ou TIB-KAT^{®} 216 (disponible respectivement auprès de KANEKA ou TIB CHEMICALS). Ces catalyseurs à base d'étain conviennent particulièrement pour les polymères silylés de formule (II).

Le ou les catalyseurs représentent de préférence de 0,2% à 0,8% en poids, par rapport au poids total de la composition.

### Autres additifs :

Selon un mode de réalisation, la composition comprend outre les ingrédients (A), (B), (C) et (D) de 0% à 30% en poids, en particulier de 0,5% à 30% en poids, de préférence de 10% à 30% en poids, d'au moins un additif choisi parmi les plastifiants, les solvants, les pigments, les promoteurs d'adhérence, les absorbeurs d'humidité, les stabilisants UV (ou anti-oxydants), les agents rhéologiques ainsi que les charges autres que les charges carbonatées.

La composition selon l'invention peut notamment comprendre au moins un agent plastifiant à raison de 5% à 30% en poids, de préférence de 10% à 30% en poids, préférentiellement de 15% à 25% en poids par rapport au poids total de ladite composition.

A titre d'exemple d'agent plastifiant utilisable, on peut utiliser n'importe quel agent plastifiant habituellement utilisé dans le domaine des compositions de mastic.

De préférence, on utilise :
- le diisodecyl phtalate, tel que commercialisé sous le nom PALATINOL^{™} DIDP par la Société BASF,
- un ester d'acide alkylsulphonique et de phénol, tel que commercialisé sous le nom MESAMOLL^{®} par la société LANXESS,
- le diisononyl-1,2-cyclohexanedicarboxylate, tel que commercialisé sous le nom HEXAMOLL DINCH^{®} par la société BASF,
- le tétravalérate de pentaérythritol, tel que commercialisé sous le nom PEVALEN^{™} par la Société PERSTORP.

La composition selon l'invention peut également comprendre de 0% à 5% en poids d'un solvant, de préférence un solvant volatil à température ambiante (température de l'ordre de 23°C). Le solvant volatil peut par exemple être choisi parmi les alcools volatils à température ambiante, tel que l'éthanol ou l'isopropanol. Le solvant volatil permet par exemple de diminuer la viscosité de la composition et de rendre la composition plus facile à appliquer. Le caractère volatil du solvant permet au joint, obtenu après durcissement de la composition, de ne plus contenir de solvant. Ainsi, le solvant n'a par exemple pas d'influence négative sur la dureté du joint.

La composition selon l'invention peut également comprendre jusqu'à 3% en poids d'un pigment choisi parmi les pigments organiques ou inorganiques.

Par exemple, le pigment peut être TiO₂, en particulier le KRONOS^{®} 2059 commercialisé par la société KRONOS.

La composition selon l'invention peut également comprendre jusqu'à 3% en poids d'un promoteur d'adhérence qui peut être par exemple un aminosilane, tel que le 3-aminopropyltriméthoxysilane (encore appelé AMMO).

La composition selon l'invention peut également comprendre jusqu'à 3% en poids d'un absorbeur d'humidité qui peut être choisi parmi le vinyltriméthoxysilane (VTMO), le vinyltriéthoxysilane (VTEO), les alkoxyarylsilanes, tel que le GENIOSIL^{®} XL 70 disponible auprès de la Société WACKER.

La composition selon l'invention peut également comprendre des stabilisants UV ou anti-oxydants, parmi lesquels on peut citer les benzotriazoles, les benzophénones, les amines dites encombrées telles que le bis(2,2,6,6,-tétraméthyl-4-piperidyl)sébacéate, et leurs mélanges. On peut par exemple citer les produits TINUVIN^{®} 328 ou TINUVIN^{™} 770 commercialisés par BASF.

La composition selon l'invention peut également comprendre de 1% à 30% en poids (par rapport au poids total de la composition selon l'invention) d'un agent rhéologique, de préférence de 5% à 30 % en poids, plus préférentiellement de 10% à 25% en poids

A titre d'exemple agent rhéologique, on peut citer n'importe quel agent de rhéologie habituellement utilisé dans le domaine des compositions de mastic.

De préférence, on utilise un ou plusieurs agents de rhéologie choisis parmi les agents thixotropiques, et plus préférentiellement parmi:
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée,
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172 ;
- les cires d'amides micronisées, tel que le CRAYVALLAC SLX commercialisé par ARKEMA.

La composition selon l'invention peut enfin comprendre de 0% à 30% en poids, de préférence de 0% à 10%, encore plus préférentiellement de 1% à 10% en poids (par rapport au poids total de la composition) d'une charge autre que la charge carbonatée (D) définie précédemment.

Ladite charge autre que la charge carbonatée (D) peut être choisie parmi les charges organiques, les charges inorganiques et leurs mélanges.

A titre de charge(s) organique(s), on peut utiliser n'importe quelle(s) charge(s) organique(s) et notamment polymérique(s) typiquement utilisée(s) dans le domaine des compositions de mastic.

On peut utiliser par exemple du polychlorure de vinyle (PVC), des polyoléfines, du caoutchouc, de l'éthylène vinyl acétate (EVA), des fibres aramides telles que le Kevlar^{®}.

On peut utiliser également des microsphères creuses en polymère thermoplastique expansibles ou non expansibles. On peut notamment citer des microsphères creuses en chlorure de vinylidène/acrylonitrile.

La taille moyenne de particule de la (des) charge(s) utilisable(s) comme charge autre que la charge carbonatée (D) est de préférence inférieure ou égale à 10 microns, plus préférentiellement inférieure ou égale à 3 microns, afin d'éviter leur sédimentation dans la composition selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

De préférence, la charge autre que la charge carbonatée (D) est une charge inorganique.

Les charges inorganiques peuvent se présenter sous la forme de particules de géométrie diverse. Elles peuvent être par exemple sphériques, fibreuses, ou présenter une forme irrégulière.

Selon un mode de réalisation, la charge est choisie parmi le sable, les billes de verre, le verre, le quartz, la barite, l'alumine, le mica, le talc. De préférence, la charge autre que la charge carbonatée (D) est choisie parmi le sable et les billes de verre.

Le sable qui peut être utilisé dans la présente invention a de préférence une granulométrie allant de 0,1 à 400 µm, préférentiellement de 1 à 400 µm, de préférence encore de 10 à 350 µm, de préférence encore de 50 à 300 µm.

Les billes de verre qui peuvent être utilisées dans la présente invention ont de préférence une granulométrie allant de 0,1 à 400 µm, préférentiellement de 1 à 400 µm, de préférence encore de 10 à 350 µm, de préférence encore de 50 à 300 µm.

Selon une variante préférée, la composition selon l'invention comprend, et de préférence est constituée essentiellement de :
- 10 à 50 % en poids de Polymère (A) à groupement alcoxysilane ;
- 25 à 80 % en poids de charge carbonatée (B) ;
- 0,5 à 5 % en poids de résine polysiloxane (C) ;
- 0,2 à 0,8% en poids de catalyseur de réticulation (D) ; et de
- 0,5 à 30 % d'un additif choisi parmi les plastifiants, les solvants, les pigments, les promoteurs d'adhérence, les absorbeurs d'humidité, les stabilisants UV, les agents rhéologiques ainsi que les charges autres que les charges carbonatées.

Selon une autre variante préférée, la composition selon l'invention comprend, et de préférence est constituée essentiellement de :
- 20 à 30%, en poids de Polymère (A) à groupement alcoxysilane ;
- 40 à 60% en poids de charge carbonatée (B) ;
- 0,5 à 1,5 % en poids de résine polysiloxane (C) ;
- 0,2 à 0,8% en poids de catalyseur de réticulation (D) ; et de
- 10 à 30 % d'un additif choisi parmi les plastifiants, les solvants, les pigments, les promoteurs d'adhérence, les absorbeurs d'humidité, les stabilisants UV, les agents rhéologiques ainsi que les charges autres que les charges carbonatées.

La composition objet de l'invention peut être préparée par simple mélange de ses ingrédients. De préférence, le ou les polymères à groupement alcoxysilane (A) sont mélangés avec la résine polysiloxane (C) dans un récipient adapté, puis avec la ou le(s) charge(s) (carbonatée (B) et autres charges) à une température allant de 5°C à 80°C, de préférence sous atmosphère inerte. Ensuite sont introduits dans le mélangeur, l'absorbeur d'humidité, puis les autres additifs et enfin le catalyseur (D).

La présente invention concerne également l'utilisation de la composition telle que définie ci-dessus, comme adhésif, mastic ou revêtement, de préférence comme mastic, par exemple comme mastic de construction.

Les substrats concernés sont très variés, et choisis de préférence parmi le béton, un métal comme l'aluminium, ou encore l'acier.

La composition peut en particulier être utilisée dans le domaine de la construction, pour faire par exemple des joints d'étanchéité et de dilatation dans les bâtiments, notamment entre substrats béton/béton. La composition peut également être utilisée dans l'industrie, par exemple dans l'industrie automobile, pour assembler des équipements comme par exemple les fours-tunneliers mis en œuvre pour la peinture des voitures.

Les exemples suivants sont donnés à titre purement illustratif de l'invention et ne sauraient être interprétés pour en limiter la portée.

### EXEMPLES

### Exemple A (référence) :

La composition de mastic listée dans le tableau 1 ci-après a été préparée par mélange des ingrédients selon le mode opératoire indiqué plus haut. La teneur en ingrédient est indiquée en % poids/poids.

### Mesure de l'allongement à la rupture du joint adhésif (obtenu au temps initial) :

Le principe de la mesure consiste à étirer dans une machine de traction, dont la mâchoire mobile se déplace à une vitesse constante égale à 100 mm/minute, une éprouvette standard constituée de la composition réticulée (constitutive du joint adhésif) et à enregistrer, au moment où se produit la rupture de l'éprouvette, la contrainte de traction appliquée (en MPa) ainsi que l'allongement de l'éprouvette (en %).

L'éprouvette standard est en forme d'haltère, comme illustré dans la norme internationale ISO 37. La partie étroite de l'haltère utilisée a pour longueur 20 mm, pour largeur 4 mm et pour épaisseur 500 µm.

Pour préparer ladite éprouvette, la composition de mastic est appliquée dans un moule en téflon, et laissée à réticuler durant 15 jours à 23°C et 50 % d'humidité relative.

La mesure est réalisée sitôt après réticulation.

Le résultat obtenu est indiqué en % dans le tableau 2.

### Mesure du module à 100% d'élongation du joint adhésif (obtenu au temps initial) :

L'essai de traction décrit ci-dessus est répété avec la même machine de traction et la même éprouvette standard, obtenue par réticulation de la composition de mastic dans les mêmes conditions.

Le module à 100% d'élongation obtenu est indiqué en MPa dans le tableau 2.

### Mesures de l'allongement à la rupture et du module à 100% d'élongation après stockage en température du joint adhésif :

Les mesures ci-dessus sont répétées sur une composition de mastic qui, après réticulation, est exposée à une température de 130°C pendant 1 semaine.

Les résultats obtenus sont indiqués dans le tableau 2.

### Exemples 1 et 2 (selon l'invention) :

On répète l'exemple A avec les compositions des exemples 1 et 2 listées dans le Tableau 1.

Les résultats obtenus, indiqués dans le Tableau 2, font clairement apparaître que l'allongement à la rupture du joint adhésif des exemples 1 et 2 qui a été stocké durant 1 semaine à 130°C est significativement mieux maintenue par rapport à celle mesurée sitôt après réticulation, par rapport à la composition de référence A. Il en est de même pour le module à 100% d'élongation.

Plus particulièrement, les valeurs mesurées après stockage d'une semaine à 130 °C du joint adhésif, pour l'élongation à la rupture et le module à 100% d'élongation, sont acceptables pour les exemples 1 et 2, alors qu'elles ne le sont pas pour l'exemple de référence A.

### Exemple B (comparatif) :

On répète l'exemple A avec la composition de l'exemple B listée dans le Tableau 1, qui est conforme à l'enseignement de la demande internationale WO 2018/215463.

Le résultat obtenu, indiqué dans le Tableau 2, montre une dégradation significative à la fois pour l'allongement à la rupture et pour le module à 100% d'élongation du joint adhésif, qui résulte de son stockage d'une semaine à 130°C, par rapport aux compositions des exemples 1 et 2.

Plus particulièrement, les valeurs mesurées après stockage d'une semaine à 130 °C du joint adhésif, pour l'élongation à la rupture et le module à 100% d'élongation, ne sont pas acceptables.

**[Tableau 1]**

| | **Ingrédients** | **Teneur (en % poids/poids)** | | | |
|---|---|---|---|---|---|
| | | **Ex. A (réf.)** | **Ex. 1** | **Ex. 2** | **Ex. B (comp.)** |
| (A) | GENIOSIL^{®} STP-E35 | 15,97 | 15,00 | 15,00 | 15,00 |
| | MS POLYMER^{™} S227 | 7,00 | 7,00 | 7,00 | 7,00 |
| (B) | MIKHART^{®} 1T | 49,70 | 49,70 | 49,70 | 49,70 |
| (C) | DOWSIL^{®} 3055 | - | 0,97 | - | - |
| | DOWSIL^{®} 0217 | - | - | 0,97 | - |
| | DC 3074^{®} | - | - | - | 0,97 |
| (D) | SILQUEST^{®} A-1120 | 0,49 | 0,49 | 0,49 | 0,49 |
| | DBU | 0,10 | 0,10 | 0,10 | 0,10 |
| | MESAMOLL ^{®} | 19,28 | 19,28 | 19,28 | 19,28 |
| | KRONOS^{®} 2059 | 1,98 | 1,98 | 1,98 | 1,98 |
| | VTMO | 1,48 | 1,48 | 1,48 | 1,48 |
| | TINUVIN^{®} T770 | 0,25 | 0,25 | 0,25 | 0,25 |
| | TINUVIN^{®} 328 | 0,25 | 0,25 | 0,25 | 0,25 |
| | CRAYVALLAC SLX | 3,50 | 3,50 | 3,50 | 3,50 |

**[Tableau 2]**

| Propriété mesurée pour le joint adhésif | | **Ex. A (réf.)** | **Ex. 1** | **Ex. 2** | **Ex. B (comp.)** |
|---|---|---|---|---|---|
| sitôt après réticulation | Allongement à la rupture (en %) | 580 | 740 | 650 | 630 |
| | Module à 100% d'élongation (en MPa) | 0,75 | 0,5 | 0,57 | 0,55 |
| après stockage d'une semaine à 130°C | Allongement à la rupture (en %) | 20 | 400 | 210 | 65 |
| | Module à 100% d'élongation (en MPa) | 0 | 0,48 | 0,4 | 0,15 |

## Revendications

1. Composition de mastic comprenant :
- de 3 à 80 % d'un polymère (A) à groupement alcoxysilane,
- d'au moins 25 % d'une charge carbonatée (B), et
- de 0,5 à 20 % d'une résine polysiloxane (C) comprenant, en tant que groupements directement reliés à l'atome de silicium :
- au moins un groupement phényle ; et
- au moins un groupement choisi parmi un hydroxyle et un groupement aminoalkylène de formule : -R'⁰- NH-R"⁰, dans laquelle :
- R'⁰ est un radical alkylène comprenant de 2 à 5 atomes de carbone, et
- R"⁰ est un atome d'hydrogène ou un radical alkyle comprenant de 1 à 5 atomes de carbone ; et
- de 0,1 à 1 % d'un catalyseur de réticulation (D) ;
lesdits pourcentages étant exprimés en poids sur la base du poids total de ladite composition.

2. Composition de mastic selon la revendication 1, **caractérisée en ce que** le polymère (A) à groupement alcoxysilane comprend au moins un, de préférence au moins deux groupements de formule (I) :
[Chem 13]
-Si(R⁴)ₚ(OR⁵)₃₋ₚ (I)
dans laquelle :
- R⁴ et R⁵, identiques ou différents, représentent chacun un radical alkyl linéaire ou ramifié comprenant de 1 à 4 atomes de carbone; et
- p est un nombre entier égal à 0, 1 ou 2.

3. Composition de mastic selon la revendication 2, **caractérisée en ce que** le polymère (A) à groupement alcoxysilane est choisi parmi les polymères de formules (II), (III) ou (IV) :
[Chem 14]
(R⁵O)₃₋ₚ(R⁴)ₚSi - R⁰ - [OR²]ₙ - R⁰ - Si(R⁴)p(OR⁵)₃₋ₚ (II) 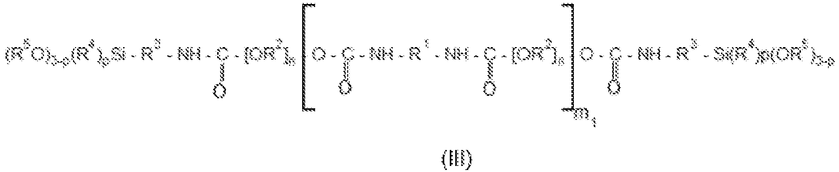 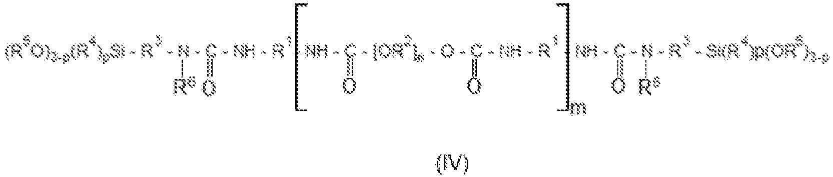
dans lesquelles :
- R⁰ représente un radical divalent alkylène linéaire ou ramifié comprenant de 3 à 6 atomes de carbone ;
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 2 à 4 atomes de carbone ;
- R³ représente un radical divalent alkylène linéaire ou ramifié comprenant de 1 à 6 atomes de carbone ;
- R⁶ représente un atome d'hydrogène, un radical phényle, un radical alkyle linéaire, ramifié ou cyclique comprenant de 1 à 6 atomes de carbone, ou un radical 2-succinate de formule : 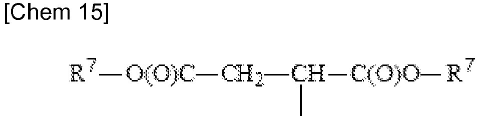 dans laquelle R⁷ est un radical alkyle linéaire ou ramifié comprenant de 1 à 6 atomes de carbone ;
- n est un nombre entier tel que la masse moléculaire moyenne en nombre du bloc polyéther de formule -[OR²]ₙ- va de 300 g/mol à 40 000 g/mol dans les polymères de formules (II), (III) et (IV) ;
- m₁ est zéro ou un nombre entier ;
- n et m₁ sont tels que la masse moléculaire moyenne en nombre du polymère de formule (III) va de 500 g/mol à 50 000 g/mol ;
- m est un nombre entier différent de zéro ;
- n et m sont tels que la masse moléculaire moyenne en nombre du polymère de formule (IV) va de 500 g/mol à 50 000 g/mol.

4. Composition de mastic selon l'une des revendications 1 à 3, **caractérisée en ce que** la charge carbonatée est choisie parmi les carbonates de métaux alcalin ou alcalino-terreux et leurs mélanges, et est, de préférence, le carbonate de calcium.

5. Composition de mastic selon l'une des revendications 1 à 4, **caractérisée en ce que** la résine polysiloxane (C) comprend un groupement aminoalkylène de formule :
-R'⁰- NH-R"⁰; dans laquelle R'⁰ est un radical alkylène comprenant de 2 à 3 atomes de carbone et R"⁰ est un atome d'hydrogène.

6. Composition de mastic selon l'une des revendications 1 à 5, **caractérisée en ce que** la résine polysiloxane (C) est un silsesquioxane.

7. Composition de mastic selon la revendication 6, **caractérisée en ce que** le silsesquioxane (C) répond à la formule générale (V) : 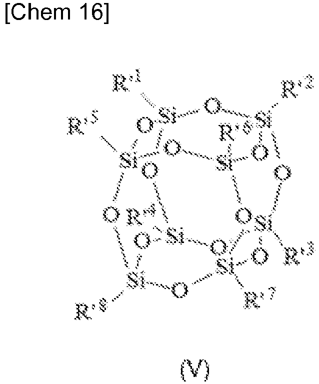
dans laquelle chacun de R'¹ à R'⁸ représente, indépendamment les uns des autres, un groupe choisi parmi :
- un atome d'hydrogène,
- un groupe hydroxy ou le groupe aminoalkylène de formule : -R'⁰- NH-R"⁰ ;
- un radical choisi parmi le groupe constitué d'un radical alcoxy linéaire ou ramifié en C₁-C₄, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'⁹R'¹⁰ dans lequel R'⁹ et R'¹⁰ représentent chacun, indépendamment l'un de l'autre, un atome d'hydrogène ou un radical choisi dans le groupe constitué d'un alkyle linéaire ou ramifié en C₁-C₄, d'un alcoxy linéaire ou ramifié en C₁-C₄, d'un alcényle en C₂-C₄, d'un phényle, d'un radical allyle en C₃-C₆, d'un radical aliphatique cyclique en C₃-C₈, et d'un radical acyle en C₁-C₄ ;
à condition que :
- au moins un radical parmi les radicaux R'¹ à R'⁸ soit le radical phényle ; et
- au moins un radical parmi les radicaux R'¹ à R'⁸ soit ou bien un groupe hydroxyle ou bien le groupe aminoalkylène de formule : -R'⁰- NH-R"⁰-.

8. Composition de mastic selon l'une des revendications 1 à 7, **caractérisée en ce que** la résine polysiloxane (C) a une masse moléculaire moyenne en nombre allant de 400 g/mol à 4000 g/mol.

9. Composition de mastic selon l'une des revendications 1 à 8, **caractérisée en ce qu'**elle comprend outre les ingrédients (A), (B), (C) et (D), de 0,5% à 30% en poids d'au moins un additif choisi parmi les plastifiants, les solvants, les pigments, les promoteurs d'adhérence, les absorbeurs d'humidité, les stabilisants UV, les agents rhéologiques ainsi que les charges autres que les charges carbonatées.

10. Composition de mastic selon l'une des revendications 1 à 9, **caractérisée en ce qu'**elle comprend de :
- 10 à 50 % en poids de Polymère (A) à groupement alcoxysilane ;
- 25 à 80 % en poids de charge carbonatée (B) ;
- 0,5 à 5 % en poids de résine polysiloxane (C) ;
- 0,2 à 0,8% en poids de catalyseur de réticulation (D) ; et de
- 0,5 à 30 % d'un additif choisi parmi les plastifiants, les solvants, les pigments, les promoteurs d'adhérence, les absorbeurs d'humidité, les stabilisants UV, les agents rhéologiques ainsi que les charges autres que les charges carbonatées.

11. Composition de mastic selon l'une des revendications 1 à 10, **caractérisée en ce qu'**elle comprend de :
- 20 à 30%, en poids de Polymère (A) à groupement alcoxysilane ;
- 40 à 60% en poids de charge carbonatée (B) ;
- 0,5 à 1,5 % en poids de résine polysiloxane (C) ;
- 0,2 à 0,8% en poids de catalyseur de réticulation (D) ; et de
- 10 à 30 % d'un additif choisi parmi les plastifiants, les solvants, les pigments, les promoteurs d'adhérence, les absorbeurs d'humidité, les stabilisants UV, les agents rhéologiques ainsi que les charges autres que les charges carbonatées.

12. Utilisation de la composition telle que définie dans l'une des revendications 1 à 11, comme adhésif, mastic ou revêtement.

## Patentansprüche

1. Dichtstoffzusammensetzung, umfassend:
- 3 % bis 80 % eines Polymers (A) mit einer Alkoxysilangruppe,
- mindestens 25 % eines Carbonat-Füllstoffs (B) und
- 0,5 % bis 20 % eines Polysiloxanharzes (C), das als direkt an das Siliciumatom gebundene Gruppen Folgendes umfasst:
- mindestens eine Phenylgruppe und
- mindestens eine Gruppe, die ausgewählt ist aus einer Hydroxyl- und einer Aminoalkylengruppe der Formel: -R'⁰-NH-R"⁰, in der:
- R'⁰ für einen Alkylenrest mit 2 bis 5 Kohlenstoffatomen steht und
- R"⁰ für ein Wasserstoffatom oder einen Alkylrest mit 1 bis 5 Kohlenstoffatomen steht; und
- 0,1 % bis 1 % eines Vernetzungskatalysators (D); wobei diese Prozentangaben als Gewichtsprozente bezogen auf das Gesamtgewicht der Zusammensetzung angegeben sind.

2. Dichtstoffzusammensetzung nach Anspruch 1, **dadurch gekennzeichnet, dass** das Polymer (A) mit einer Alkoxysilangruppe mindestens ein und vorzugsweise mindestens zwei Gruppen der Formel (I) umfasst:
[Chem. 13]
-Si(R⁴)ₚ(OR⁵)₃₋ₚ (I),
in der:
- R⁴ und R⁵ gleich oder verschieden sind und jeweils für einen linearen oder verzweigten Alkylrest mit 1 bis 4 Kohlenstoffatomen stehen und
- p eine ganze Zahl gleich 0, 1 oder 2 ist.

3. Dichtstoffzusammensetzung nach Anspruch 2, **dadurch gekennzeichnet, dass** das Polymer (A) mit einer Alkoxysilangruppe aus den Polymeren der Formeln (II), (III) oder (IV) ausgewählt ist:
[Chem. 14]
(R⁵O)₃₋ₚ(R⁴)ₚSi - R⁰ - [OR²]ₙ - R⁰ - Si(R⁴)p(OR⁵)₃₋ₚ (II) 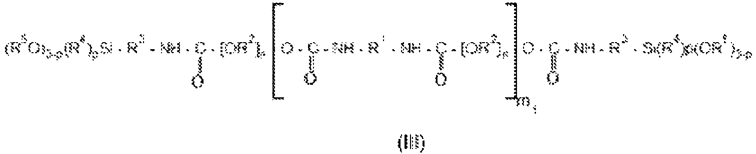 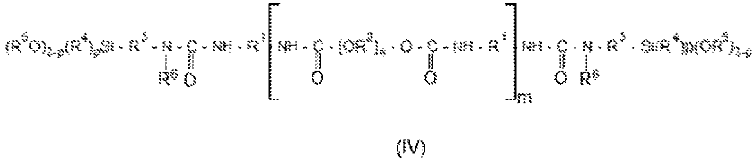
in denen:
- R⁰ für einen linearen oder verzweigten zweiwertigen Alkylenrest mit 3 bis 6 Kohlenstoffatomen steht;
- R¹ für einen zweiwertigen Kohlenwasserstoffrest mit 5 bis 15 Kohlenstoffatomen steht, der aromatisch oder aliphatisch, linear, verzweigt oder cyclisch sein kann;
- R² für einen linearen oder verzweigten zweiwertigen Alkylenrest mit 2 bis 4 Kohlenstoffatomen steht;
- R³ für einen linearen oder verzweigten zweiwertigen Alkylenrest mit 1 bis 6 Kohlenstoffatomen steht;
- R⁶ für ein Wasserstoffatom, einen Phenylrest oder einen linearen, verzweigten oder cyclischen Alkylrest mit 1 bis 6 Kohlenstoffatomen, oder einen 2-Succinatrest der Formel: 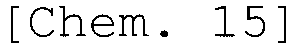 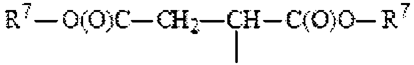 steht, in der R⁷ ein linearer oder verzweigter Alkylrest mit 1 bis 6 Kohlenstoffatomen ist;
- n eine solche ganze Zahl ist, dass die zahlenmittlere Molmasse des Polyetherblocks der Formel - [OR²]ₙ- in den Polymeren der Formeln (II), (III) und (IV) im Bereich von 300 g/mol bis 40.000 g/mol liegt;
- m₁ null oder eine ganze Zahl ist;
- n und m₁ so beschaffen sind, dass die zahlenmittlere Molmasse des Polymers der Formel (III) 500 g/mol bis 50.000 g/mol beträgt;
- m eine von null verschiedene ganze Zahl ist;
- n und m so beschaffen sind, dass die zahlenmittlere Molmasse des Polymers der Formel (IV) im Bereich von 500 g/mol bis 50.000 g/mol liegt.

4. Dichtstoffzusammensetzung nach einem der Ansprüche 1 bis 3, **dadurch gekennzeichnet, dass** der Carbonat-Füllstoff aus Alkalimetall- oder Erdalkalimetallcarbonaten und Mischungen davon ausgewählt ist und vorzugsweise Calciumcarbonat ist.

5. Dichtstoffzusammensetzung nach einem der Ansprüche 1 bis 4, **dadurch gekennzeichnet, dass** das Polysiloxanharz (C) eine Aminoalkylengruppe der folgenden Formel umfasst: -R'⁰- NH-R"⁰; in der R'⁰ ein Alkylenrest mit 2 bis 3 Kohlenstoffatomen ist und R"⁰ ein Wasserstoffatom ist.

6. Dichtstoffzusammensetzung nach einem der Ansprüche 1 bis 5, **dadurch gekennzeichnet, dass** es sich bei dem Polysiloxanharz (C) um ein Silsesquioxan handelt.

7. Dichtstoffzusammensetzung nach Anspruch 6, **dadurch gekennzeichnet, dass** das Silsesquioxan (C) der allgemeinen Formel (V): 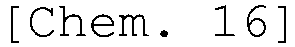 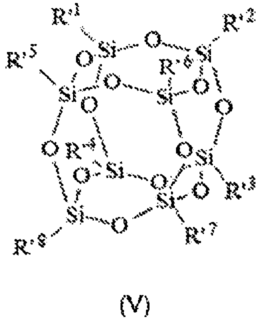
entspricht, in der R'¹ bis R'⁸ jeweils unabhängig voneinander für eine Gruppe stehen, die ausgewählt ist aus:
- einem Wasserstoffatom,
- einer Hydroxygruppe oder der Aminoalkylengruppe der Formel: -R'⁰- NH-R"⁰;
- einem Rest ausgewählt aus der Gruppe bestehend aus einem linearen oder verzweigten C₁-C₄-Alkoxyrest, einem linearen oder verzweigten Alkylrest mit 1 bis 30 Kohlenstoffatomen, einem Alkenylrest mit 2 bis 30 Kohlenstoffatomen, einem aromatischen Rest mit 6 bis 30 Kohlenstoffatomen, einem Allylrest mit 3 bis 30 Kohlenstoffatomen, einem cyclischen aliphatischen Rest mit 3 bis 30 Kohlenstoffatomen, einem Acylrest mit 1 bis 30 Kohlenstoffatomen und
- einer -OSiR'⁹R'¹⁰-Gruppe, in der R'⁹ und R'¹⁰ jeweils unabhängig voneinander für ein Wasserstoffatom oder einen Rest ausgewählt aus der Gruppe bestehend aus linearen oder verzweigten C₁-C₄-Alkylresten, linearen oder verzweigten C₁-C₄-Alkoxyresten, C₂-C₄-Alkenylresten, einem Phenyl, einem C₃-C₆-Allylrest, einem aliphatischen cyclischen C₃-C₈-Rest und einem C₁-C₄-Acylrest stehen;
mit der Maßgabe, dass:
- mindestens ein Rest unter den Resten R'¹ bis R'⁸ ein Phenylrest ist; und
- mindestens ein Rest unter den Resten R'¹ bis R'⁸ entweder eine Hydroxylgruppe oder die Aminoalkylengruppe der folgenden Formel ist: -R'⁰- NH-R"⁰-.

8. Dichtstoffzusammensetzung nach einem der Ansprüche 1 bis 7, **dadurch gekennzeichnet, dass** das Polysiloxanharz (C) eine zahlenmittlere Molmasse von 400 g/mol bis 4000 g/mol aufweist.

9. Dichtstoffzusammensetzung nach einem der Ansprüche 1 bis 8, **dadurch gekennzeichnet, dass** sie neben den Inhaltsstoffen (A), (B), (C) und (D) 0,5 bis 30 Gew.-% mindestens eines Additivs, das aus Weichmachern, Lösungsmitteln, Pigmenten, Haftvermittlern, Feuchtigkeitsabsorbern, UV-Stabilisatoren, rheologischen Mitteln sowie Füllstoffen, die von Carbonat-Füllstoffen verschieden sind, ausgewählt ist, umfasst.

10. Dichtstoffzusammensetzung nach einem der Ansprüche 1 bis 9, **dadurch gekennzeichnet, dass** sie Folgendes umfasst:
- 10 bis 50 Gew.-% Polymer (A) mit einer Alkoxysilangruppe;
- 25 bis 80 Gew.-% Carbonat-Füllstoff (B);
- 0,5 bis 5 Gew.-% Polysiloxanharz (C);
- 0,2 bis 0,8 Gew.-% Vernetzungskatalysator (D) und
- 0,5 % bis 30 % eines Additivs, das aus Weichmachern, Lösungsmitteln, Pigmenten, Haftvermittlern, Feuchtigkeitsabsorbern, UV-Stabilisatoren, rheologischen Mitteln sowie Füllstoffen, die von Carbonat-Füllstoffen verschieden sind, ausgewählt ist.

11. Dichtstoffzusammensetzung nach einem der Ansprüche 1 bis 10, **dadurch gekennzeichnet, dass** sie Folgendes umfasst:
- 20 bis 30 Gew.-% Polymer (A) mit einer Alkoxysilangruppe;
- 40 bis 60 Gew.-% Carbonat-Füllstoff (B);
- 0,5 bis 1,5 Gew.-% Polysiloxanharz (C);
- 0,2 bis 0,8 Gew.-% Vernetzungskatalysator (D) und
- 10 % bis 30 % eines Additivs, das aus Weichmachern, Lösungsmitteln, Pigmenten, Haftvermittlern, Feuchtigkeitsabsorbern, UV-Stabilisatoren, rheologischen Mitteln sowie Füllstoffen, die von Carbonat-Füllstoffen verschieden sind, ausgewählt ist.

12. Verwendung der Zusammensetzung gemäß einem der Ansprüche 1 bis 11 als Klebstoff, Dichtstoff oder Beschichtung.

## Claims

1. A sealant composition comprising:
- from 3% to 80% of a polymer (A) comprising an alkoxysilane group,
- at least 25% of a carbonate filler (B), and
- from 0.5% to 20% of a polysiloxane resin (C) comprising, as groups directly linked to the silicon atom:
- at least one phenyl group; and
- at least one group chosen from a hydroxyl and an aminoalkylene group of formula: -R'⁰- NH-R"⁰, wherein:
- R'⁰ is an alkylene radical comprising from 2 to 5 carbon atoms;
and
- R"⁰ is a hydrogen atom or an alkyl radical comprising from 1 to 5 carbon atoms; and
- from 0.1% to 1% of a crosslinking catalyst (D);
said percentages being expressed by weight on the basis of the total weight of said composition.

2. The sealant composition as claimed in claim 1, **characterized in that** the polymer (A) comprising an alkoxysilane group comprises at least one, preferably at least two, groups of formula (I):
[Chem 13]
-Si(R⁴)ₚ(OR⁵)₃₋ₚ (I)
wherein:
- R⁴ and R⁵, which may be identical or different, each represent a linear or branched alkyl radical comprising from 1 to 4 carbon atoms; and
- p is an integer equal to 0, 1 or 2.

3. The sealant composition as claimed in claim 2, **characterized in that** the polymer (A) comprising an alkoxysilane group is chosen from the polymers of formulae (II), (III) or (IV):
[Chem 14]
(R⁵O)₃₋ₚ(R⁴)ₚSi - R⁰ - [OR²]ₙ - R⁰ - Si(R⁴)p(OR⁵)₃₋ₚ (II) 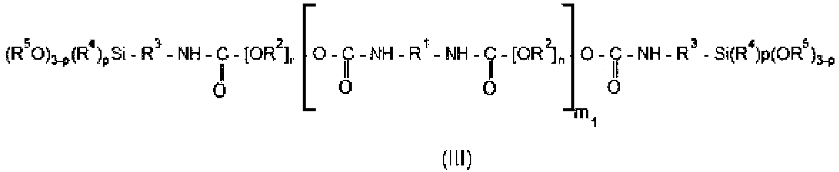 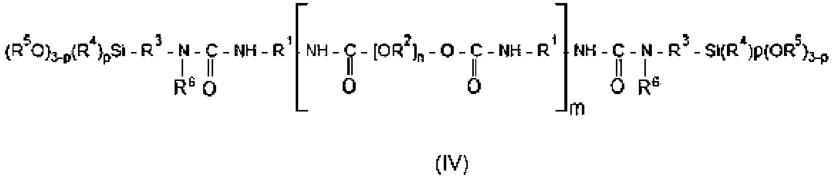
wherein:
- R⁰ represents a linear or branched divalent alkylene radical comprising from 3 to 6 carbon atoms;
- R¹ represents a divalent hydrocarbon-based radical comprising from 5 to 15 carbon atoms which can be aromatic or aliphatic and linear, branched or cyclic;
- R² represents a linear or branched divalent alkylene radical comprising from 2 to 4 carbon atoms;
- R³ represents a linear or branched divalent alkylene radical comprising from 1 to 6 carbon atoms;
- R⁶ represents a hydrogen atom, a phenyl radical, a linear, branched or cyclic alkyl radical comprising from 1 to 6 carbon atoms, or a 2-succinate radical of formula: 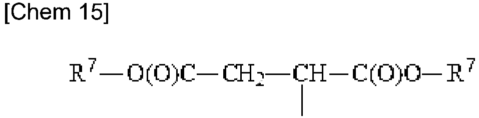 wherein R⁷ is a linear or branched alkyl radical comprising from 1 to 6 carbon atoms;
- n is an integer such that the number-average molecular weight of the polyether block of formula -[OR²]ₙ- ranges from 300 g/mol to 40 000 g/mol in the polymers of formulae (II), (III) and (IV);
- m₁ is zero or an integer;
- n and m₁ are such that the number-average molecular weight of the polymer of formula (III) ranges from 500 g/mol to 50 000 g/mol;
- m is an integer other than zero;
- n and m are such that the number-average molecular weight of the polymer of formula (IV) ranges from 500 g/mol to 50 000 g/mol.

4. The sealant composition as claimed in one of claims 1 to 3, **characterized in that** the carbonate filler is chosen from alkali metal or alkaline-earth metal carbonates and mixtures thereof; preferably, the carbonate filler is calcium carbonate.

5. The sealant composition as claimed in one of claims 1 to 4, **characterized in that** the polysiloxane resin (C) comprises an aminoalkylene group of formula:
-R'⁰- NH-R"⁰; wherein R'⁰ is an alkylene radical comprising from 2 to 3 carbon atoms and R"⁰ is a hydrogen atom.

6. The sealant composition as claimed in one of claims 1 to 5, **characterized in that** the polysiloxane resin (C) is a silsesquioxane.

7. The sealant composition as claimed in claim 6, **characterized in that** the silsesquioxane (C) corresponds to general formula (V): 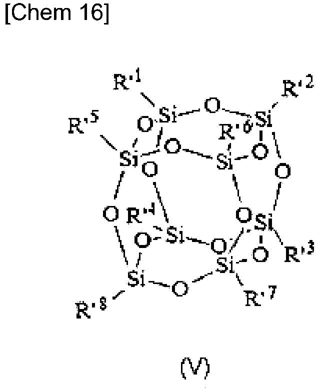
wherein each one from among R'¹ to R'⁸ represents, independently of one another, a group chosen from:
- a hydrogen atom,
- a hydroxyl group or the aminoalkylene group of formula: -R'⁰- NH-R"⁰;
- a radical chosen from the group consisting of a linear or branched C₁-C₄ alkoxy radical, a linear or branched alkyl radical comprising from 1 to 30 carbon atoms, an alkenyl radical comprising from 2 to 30 carbon atoms, an aromatic radical comprising from 6 to 30 carbon atoms, an allyl radical comprising from 3 to 30 carbon atoms, a cyclic aliphatic radical comprising from 3 to 30 carbon atoms and an acyl radical comprising from 1 to 30 carbon atoms, and
- an -OSiR'⁹R'¹⁰ group wherein R'⁹ and R'¹⁰ each represent, independently of one other, a hydrogen atom or a radical chosen from the group consisting of a linear or branched C₁-C₄ alkyl, a linear or branched C₁-C₄ alkoxy, a C₂-C₄ alkenyl, a phenyl, a C₃-C₆ allyl radical, a cyclic C₃-C₈ aliphatic radical and a C₁-C₄ acyl radical;
on condition that:
- at least one radical among the R'¹ to R'⁸ radicals is a phenyl radical; and
- at least one radical among the R'¹ to R'⁸ radicals is either a hydroxyl group or the aminoalkylene group of formula: -R'⁰- NH-R"⁰-.

8. The sealant composition as claimed in one of claims 1 to 7, **characterized in that** the polysiloxane resin (C) has a number-average molecular weight ranging from 400 g/mol to 4000 g/mol.

9. The sealant composition as claimed in one of claims 1 to 8, **characterized in that** it comprises, in addition to the ingredients (A), (B), (C) and (D), from 0.5% to 30% by weight of at least one additive chosen from plasticizers, solvents, pigments, adhesion promoters, moisture absorbers, UV stabilizers, rheological agents, and also fillers other than the carbonate fillers.

10. The sealant composition as claimed in one of claims 1 to 9, **characterized in that** it comprises from:
- 10% to 50% by weight of polymer (A) comprising an alkoxysilane group;
- 25% to 80% by weight of carbonate filler (B);
- 0.5% to 5% by weight of polysiloxane resin (C);
- 0.2% to 0.8% by weight of crosslinking catalyst (D); and
- 0.5% to 30% of an additive chosen from plasticizers, solvents, pigments, adhesion promoters, moisture absorbers, UV stabilizers, rheological agents and also fillers other than the carbonate fillers.

11. The sealant composition as claimed in one of claims 1 to 10, **characterized in that** it comprises from:
- 20% to 30% by weight of polymer (A) comprising an alkoxysilane group;
- 40% to 60% by weight of carbonate filler (B);
- 0.5% to 1.5% by weight of polysiloxane resin (C);
- 0.2% to 0.8% by weight of crosslinking catalyst (D); and
- 10% to 30% of an additive chosen from plasticizers, solvents, pigments, adhesion promoters, moisture absorbers, UV stabilizers, rheological agents and also fillers other than the carbonate fillers.

12. The use of the composition as defined in one of claims 1 to 11, as adhesive, sealant or coating.
